# EUROPÄISCHE PATENTSCHRIFT

(11) **EP 1 142 972 B1**
(45) Veröffentlichungstag und Bekanntmachung des Hinweises auf die Patenterteilung: **12.05.2004**
(21) Anmeldenummer: 01106495.3
(22) Anmeldetag: 26.03.2001
(51) Int. Cl.: C09D 17/00, C09D 7/02

(54) **Dispergiermittel zur Herstellung wässriger Pigmentpasten**
Dispersing agent for making aqueous pigment pastes
Agent dispersant pour la préparation de pâtes aqueuses pigmentaires

(30) Priorität: 08.04.2000 DE 10017667
(43) Veröffentlichungstag der Anmeldung: 10.10.2001
(73) Patentinhaber: Goldschmidt AG, 45127 Essen (DE)
(72) Erfinder: Albrecht, Gerhard, Dr., 83342 Tacherting (DE); Leitner, Hubert, 8967 Haus/Ennstal (AT); Mangel, Timo, Dr., 4060 Leonding (AT); Reuter, Ellen, 44799 Bochum (DE); Rüttgerodt, Angela, 51379 Leverkusen (DE); Silber, Stefan, Dr., 47804 Krefeld (DE)

(56) Entgegenhaltungen:
- EP-A- 0 379 676
- EP-A- 0 736 553
- DE-C- 19 802 295
- US-A- 4 370 454
- US-A- 5 585 427

## Beschreibung

Die Erfindung betrifft die Verwendung von Copolymeren mit vinylfunktionalisierten Polyethern zur Herstellung wässriger Pigmentpräparationen.

Um die Dispergierung von Feststoffen in flüssigen Medien zu erleichtern und zu verbessern, werden üblicherweise Dispergiermittel eingesetzt, die als oberflächenaktive Mittel die Benetzung der zu dispergierenden Feststoffteilchen fördern und das Aufbrechen von Agglomeraten erleichtern. Diese Dispergiermittel wirken auch stabilisierend auf die erhaltenen Dispersionen und verhindern eine Reagglomerierung oder Flockung der Feststoffteilchen. Von besonderer Bedeutung sind Dispergiermittel beispielsweise für die Dispergierung von Pigmenten bei der Herstellung von Druckfarben, Anstrichfarben und Lacken.

Netz- und Dispergiermittel erleichtern bei der Herstellung von Farben und Lacken die Einarbeitung von Pigmenten und Füllstoffen, die als wichtige Formulierungsbestandteile das optische Erscheinungsbild und die physikalisch-chemischen Eigenschaften von Beschichtungen wesentlich bestimmen. Für eine optimale Ausnutzung müssen diese Feststoffe zum einen gleichmäßig in Lacken und Farben verteilt werden, zum anderen muss die einmal erreichte Verteilung stabilisiert werden. Während der Herstellung und Verarbeitung von wässrigen Pigmentpasten und deren späteren Verwendung zur Formulierung von Lacken und Druckfarben können zahlreiche Probleme auftreten:
- Schwierige Einarbeitung der Pigmente, schlechte Benetzung
- Hohe Viskositäten von Farbpasten, Farben und Lacken
- Sedimentbildung
- Vertikales Ausschwimmen von Pigmenten (flooding)
- Horizontales Ausschwimmen von Pigmenten (floating)
- Geringer Glanzgrad
- Geringes Deckvermögen
- Unzureichende Transparenz
- Ungenügende Farbstärke
- Schlecht reproduzierbare Farbtöne, Farbtonwanderung
- Zu hohe Ablaufneigung von Lacken.

Es fehlte daher nicht an Versuchen, wirksame Dispergieradditive für Feststoffe, insbesondere Pigmente zur Verfügung zu stellen. So werden beispielsweise wasserlösliche, hydrophile Polyetherketten aufweisende Polyisocyanat-Additionsprodukte (EP-A-0731148), saure Poly(meth)acrylate (US-A 3,980,602, WO 94/21701), Phosphatester von Polyalkylenoxid-blockpolyestern (WO 97/19948), Aminoxide (DE-A-19904603) oder alternierende Copolymere aus Vinylmonomeren und Dicarbonsäurediestern (WO 96/14347, EP-A-0791024), insbesondere Copolymere auf Basis von Maleinsäurederivaten und Vinylmonomeren zu diesem Zwecke beschrieben.

Jedoch sind mit dem Einsatz solcher Produkte auch eine Vielzahl von Nachteilen verbunden. So sind häufig hohe Gehalte an Dispergieradditiven erforderlich; die erreichbaren Pigmentierungshöhen der Pasten sind unbefriedigend niedrig; die Stabilität der Pasten und damit deren Viskositätskonstanz ist unzureichend; Flockulation und Aggregation lassen sich nicht immer vermeiden. Insbesondere die Dispergierung sehr hydrophober anorganischer Pigmente ist in vielen Fällen problematisch. Vielfach mangelt es an der Farbtonkonstanz nach Lagerung der Pasten sowie an der Kompatibilität zu diversen Bindemitteln. Durch den Einsatz bekannter Dispergieradditive wird in vielen Fällen auch die Wasserfestigkeit oder Lichtbeständigkeit von Beschichtungen negativ beeinflusst, zudem der bei der Herstellung und Verarbeitung entstehende, unerwünschte Schaum zusätzlich stabilisiert. Auch wird - bedingt durch mangelnde Verträglichkeit der Dispergierharze in vielen Auflackgütern - vielfach in unerwünschter Weise der Glanz beeinträchtigt.

Der vorliegenden Erfindung liegt daher die Aufgabe zugrunde, für die Dispergierung von Pigmenten eine Vielzahl der genannten Nachteile zu überwinden, wobei besonders die Lagerstabilität der Pigmentkonzentrate im Hinblick auf rheologisches Verhalten, Flockulation, Aggregation sowie Farbtonwanderung durch extreme Hydrolysebeständigkeit der eingesetzten Wirkstoffe sowie die Wetterfestigkeit und Vergilbungsstabilität daraus hergestellter Beschichtungen positiv beeinflusst und durch den Einsatz der Dispergieradditive keine flüchtigen organischen Anteile in die Formulierungen eingebracht werden sollten.

Weiterhin ist die Aufgabenstellung bisher ungelöst, bindemittel- und colöser- oder VOC-freie Pigmentkonzentrate auf Basis transparenter Eisenoxide mit polymeren Netz- und Dispergieradditiven (also unter Vermeidung oberflächenaktiver Substanzen wie Alkylphenolalkoxylaten mit kritischen toxikologischen Profilen) bei Erreichen hoher Pigmentgehalte und hoher Transparenz herzustellen.

Überraschenderweise gelingt die Lösung dieser Aufgaben durch den Einsatz von Copolymeren mit ungesättigten Dicarbonsäure-Derivaten und Oxyalkylenglykol-Alkenylethern oder Polyalkylenoxid-Alkenylethern. Deren Aufbau, Herstellung und Verwendung als Betonfließhilfsmittel ist bereits in der EP-A-0736553 beschrieben.

Dementsprechend besteht eine erste Ausführungsform der vorliegenden Erfindung in der Verwendung von Copolymeren auf Basis von Oxyalkylenglykol- oder Polyalkylenoxid-Alkenylethern und ungesättigten Dicarbonsäure-Derivaten als Dispergieradditive in Lacken und Druckfarben oder zur Herstellung wässriger Pigmentkonzentrate bestehend aus:
a) 10 bis 90 Mol-% Baugruppen der Formel Ia und/oder Ib 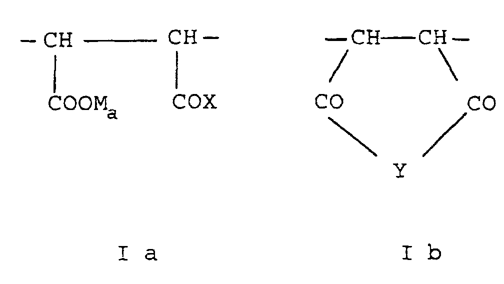 wobei
   - M =: Wasserstoff, ein- oder zweiwertiges Metallkation, Ammoniumion, organischer Aminrest
   - a =: 1 oder für den Fall, dass M ein zweiwertiges Metallkation ist, 1/2 ist,
   - X =: -OMₐ oder -O-(CₘHₗₘO)ₙ--(CₘHₗₘO)ₒ-R¹,
   wobei
   R¹ = H, ein aliphatischer Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen, der gegebenenfalls substituiert ist,
   l = 1 oder 2,
   m = 2 bis 18, wobei der Index am H-Atom durch das Produkt aus l und m gebildet wird, sowie
   n = 0 bis 100 und
   o = 0 bis 100, - NHR² und/oder - NR²₂ mit
   R² = R¹ oder -CO-NH₂ sowie
   -Q¹N - Q² - NQ³Q⁴, wobei
   Q¹ ein Wasserstoffrest oder ein einwertiger Kohlenwasserstoffrest mit 1 bis 24 Kohlenstoffatomen,
   Q² ein zweiwertiger Alkylenrest mit 2 bis 24 Kohlenstoffatomen,
   Q³ und Q⁴ - aliphatische und/oder alicyclische Alkylreste mit 1 bis 12 Kohlenstoffatomen sind, gegebenenfalls oxidiert zu -Q¹N - Q² - N⁽⁺⁾O⁽⁻⁾Q³Q⁴,
   - Y =: O, NR², wobei R² die oben genannte Bedeutung hat, oder
   N-Q²-NQ³Q⁴, wobei Q², Q³ und Q⁴ die oben genannte Bedeutung haben,
b) 1 bis 89 Mol-% Baugruppen der Formel IIa oder IIb 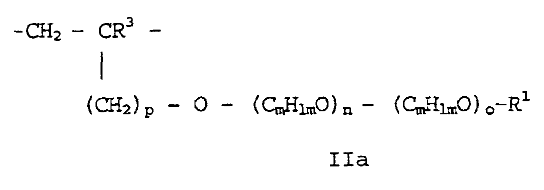 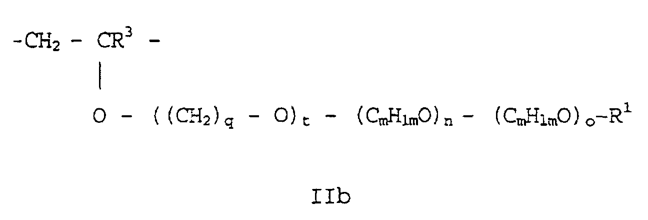 worin
   - R³ =: H, aliphatischer Kohlenwasserstoffrest mit 1 bis 5 C-Atomen,
   - p =: 0 bis 3,
   - q =: 0 bis 6, t = 0 bis 3 sowie
   R¹ und l, m, n und o die oben genannte Bedeutung aufweisen,
c) 0,1 bis 10 Mol-% Baugruppen der Formel IIIa oder IIIb 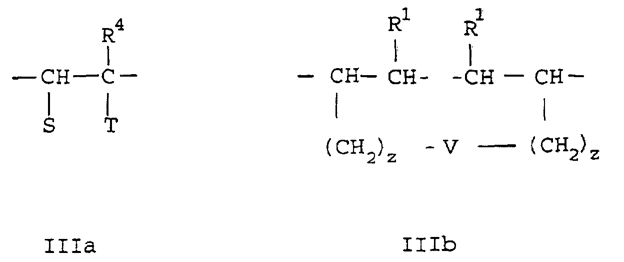 wobei
   - R⁴ =: H, CH₃
   - S =: - H, - COOMₐ, - COOR⁵
   wobei
   R⁵ = aliphatischer Kohlenwasserstoffrest mit 3 bis 20 C-Atomen, cycloaliphatischer Kohlenwasserstoffrest mit 5 bis 8 C-Atomen, Arylrest mit 6 bis 14 C-Atomen
   - T =: -U¹-(CₘHₗₘO)ₙ--(CₘHₗₘO)ₒ-R⁶
   mit 1 = 1 oder 2, m = 2 bis 18, sowie
   n = 0 bis 100 und o = 0 bis 100,
   U¹ = - CO - NH-, - O -, -CH₂O-,
   R⁶ = R¹, 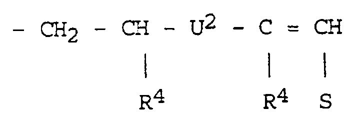 wobei U² = - NH - CO-, - O -, -OCH₂ ist,
   - W - R⁷, wobei
   W = 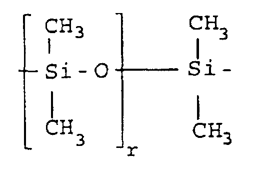
   r = 2 bis 100
   R⁷ = R¹, 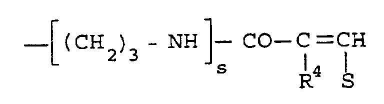 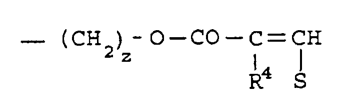
   s = 1 oder 2
   z = 0 bis 4 bedeuten, 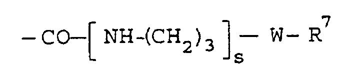 - CO - O - (CH₂)_{z} - W - R⁷
   - (CH₂)_{z} - V - (CH₂)_{z} - CH = CH - R¹ , wobei
   V = - O - CO - C₆H₄ - CO - O - oder - W - ist,
   - COOR⁵ im Falle von S = - COOR⁵ oder COOMₐ , und
   V =- O - CO - C₆H₄ - CO - O - oder - W bedeutet,
   wobei die Liganden und Indizes jeweils die vorgenannte Bedeutung haben.

Zusätzlich können weiterhin bis zu 50 Mol-%, insbesondere bis zu 20 Mol-%, bezogen auf die Summe der Baugruppen a), b) und c), Baugruppen, deren Monomer ein Vinyl-, Acrylsäure- oder Methacrylsäure-Derivat darstellt, enthalten sein.

Die Copolymer-Verbindungen entsprechend der vorliegenden Erfindung bestehen aus mindestens drei Baugruppen a), b), und c). Die erste Baugruppe a) stellt ein Dicarbonsäure-Derivat entsprechend der Formel Ia oder Ib dar.

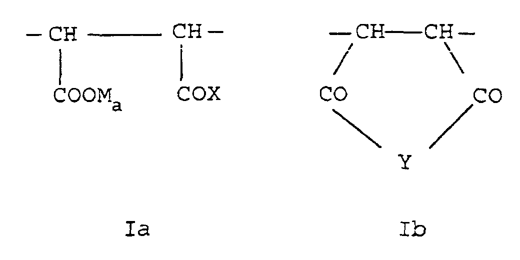

Beim Dicarbonsäure-Derivat entsprechend Formel Ia bedeutet M = Wasserstoff, ein ein- oder zweiwertiges Metallkation, Ammoniumion, ein organischer Aminrest, sowie a= 1, oder für den Fall, dass es sich bei M um ein zweiwertiges Kation handelt, 1/2. Es ergibt sich dann zusammen mit einer ebenfalls Mₐ, mit a = 1/2, enthaltenden Gruppierung eine Verbrückung über M, welches als Mₐ mit a = 1/2 nur theoretisch existiert.

Als ein- oder zweiwertiges Metallkation finden vorzugsweise Natrium-, Kalium-, Calcium-, oder Magnesiumionen Verwendung. Als organische Aminreste werden vorzugsweise substituierte Ammoniumgruppen eingesetzt, die sich ableiten von primären, sekundären oder tertiären C₁- bis C₂₀-Alkylaminen, C₁- bis C₂₀-Alkanolaminen, C₅- bis C₈-Cycloalkylaminen und C₆- bis C₁₄-Arylaminen. Beispiele für entsprechende Amine sind Methylamine, Dimethylamin, Trimethylamin, Ethanolamin, Diethanolamin, Triethanolamin, Cyclohexylamin, Dicyclohexylamin, Phenylamin, Diphenylamin in der protonierten (Ammonium-)Form.

Außerdem bedeutet X in der Formel Ia -OMₐ oder -O-(CₘHₗₘO)ₙ--(CₘHₗₘO)ₒ-R¹,wobei R¹ = H, ein aliphatischer Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen, der ggf. noch substituiert sein kann, 1 = 1 oder 2, m = 2 bis 18, sowie n = 0 bis 100 und o = 0 bis 100 sein kann. Die aliphatischen Kohlenwasserstoffreste können hierbei linear oder verzweigt sowie gesättigt oder auch ungesättigt sein.

Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyloder Sulfonsäuregruppen substituiert sein können.

Alternativ hierzu kann X noch -NHR² und/oder -NR²₂ bedeuten, was den mono- oder disubstituierten Monoamiden der entsprechenden Dicarbonsäure entspricht, wobei R² wiederum mit R¹ identisch sein kann oder statt dessen -CO-NH₂ bedeuten kann.

Anstelle des Dicarbonsäure-Derivates entsprechend Formal Ia kann die Baugruppe a) (Dicarbonsäure-Derivat) auch in cyclischer Form entsprechend der Formel Ib vorliegen, wobei Y = O (= Säureanhydrid) oder NR² (Säureimid) darstellen kann und R² die oben bezeichnete Bedeutung besitzt.

Als Dicarbonsäure-Derivate entsprechend Formel Ia oder Ib können auch Umsetzungsprodukte mit Diaminen aus der Gruppe HQ¹N - Q² - NQ³Q⁴, wobei Q¹ ein Wasserstoffrest oder ein einwertiger Kohlenwasserstoffrest mit 1 bis 24 Kohlenstoffatomen, Q² ein zweiwertiger Alkylenrest mit 2 bis 24 Kohlenstoffatomen, Q³ und Q⁴ aliphatische und/oder alicyclische Alkylreste mit 1 bis 12 Kohlenstoffatomen sind, eingesetzt werden, die unter Ausbildung von über Halbamid- oder Imidgruppen gebundenen Aminoxidgruppen oxidiert wurden.

In der zweiten Baugruppe b) entsprechend der Formel IIa oder IIb, 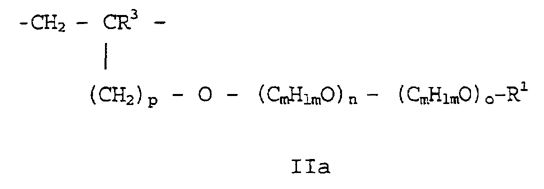 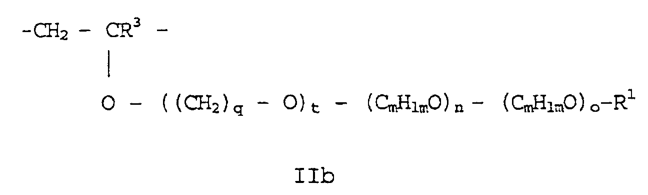 die sich von den Oxyalkylenglykol-Alkenylethern oder Polyalkylenoxid-Alkenylethern ableitet, bedeuten R³ Wasserstoff oder ein aliphatischer Kohlenwasserstoffrest mit 1 bis 5 C-Atomen (der ebenfalls linear oder verzweigt bzw. auch ungesättigt sein kann). p kann Werte zwischen 0 und 3 annehmen, q = 0 bis 6, t = 0 bis 3 und R¹, l, m, n und o besitzen die oben genannte Bedeutung.

Gemäß einer bevorzugten Ausführungsform bedeuten in Formel IIa p = 0, 1 = 2 und m = 2 oder 3, so dass es sich um Baugruppen handelt, die sich vom Polyethylenoxid- oder Polypropylenoxid-Vinylether ableiten.

Die dritte Baugruppe c) entspricht der Formel III a oder III b:

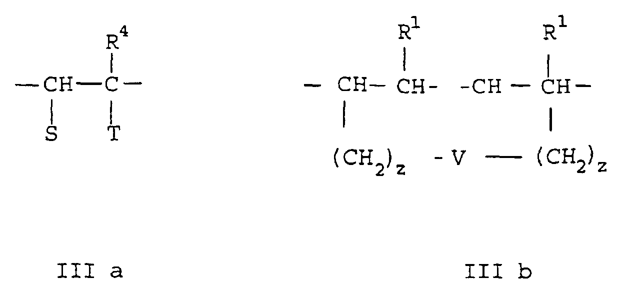

In Formel III a kann R⁴ = H oder CH₃ sein, je nachdem ob es sich um Acryl- oder Methacrylsäure-Derivate handelt. S kann hierbei -H, COOMₐ oder -COOR⁵ bedeuten, wobei a und M die oben erwähnte Bedeutung besitzen und R⁵ ein aliphatischer Kohlenwasserstoffrest mit 3 bis 20 C-Atomen, ein cycloaliphatischer Kohlenwasserstoffrest mit 5 bis 8 C-Atomen oder ein Arylrest mit 6 bis 14 C-Atomen sein kann. Der aliphatische Kohlenwasserstoffrest kann ebenfalls linear oder verzweigt, gesättigt oder ungesättigt sein. Die bevorzugten cycloaliphatischen Kohlenwasserstoffreste sind wiederum Cyclopentyl- oder Cyclohexylreste und die bevorzugten Arylreste Phenyl- oder Naphthylreste. Im Falle von T = -COOR⁵ ist S = COOMₐ oder -COOR⁵. Für den Fall, dass T und S = COOR⁵ sind, leiten sich die entsprechenden Baugruppen von den Dicarbonsäureestern ab.

Neben diesen Esterstruktureinheiten können die Baugruppen c) noch andere hydrophobe Strukturelemente besitzen. Hierzu gehören die Polyalkylenoxid-Derivate mit:

T = -U¹-(CₘHₗₘO)ₙ--(CₘHₗₘO)ₒ - R⁶

wobei 1 = 1 oder 2, m = 2 bis 18, sowie n = 0 bis 100 und o = 0 bis 100 bedeuten.

Die Polyalkylenoxid-Derivate können hierbei über eine Gruppierung U¹ mit dem Ethylrest der Baugruppe c) entsprechend Formel III a verknüpft sein, wobei U¹ = -CO-NH-, -O- oder -CH₂-O- sein kann. Hierbei handelt es sich um die entsprechenden Amid-, Vinyl- oder Allylether der Baugruppen entsprechend Formel III a. R⁶ kann hierbei wiederum R¹ (Bedeutung von R¹ siehe oben) oder 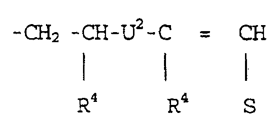 sein, wobei U² = -NH-CO-, -O- oder -OCH₂- bedeuten kann und S die oben beschriebene Bedeutung besitzt. Diese Verbindungen stellen Polyalkylenoxid-Derivate der bifunktionellen Alkenylverbindungen entsprechend Formel III a dar.

Als weiteres hydrophobes Strukturelement können die Verbindungen entsprechend Formel III a Polydimethylsiloxan-Gruppen enthalten, was im Formelschema III a T = -W-R⁷ entspricht.

W bedeutet hierbei 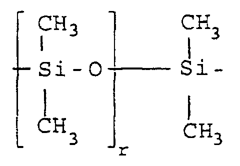 (nachfolgend Polydimethylsiloxan-Gruppierung genannt), R⁷ kann = R¹ sein und r kann hierbei Werte von 2 bis 100 annehmen.

Die Polydimethylsiloxan-Gruppierung W kann nicht nur direkt an den Ethylenrest gemäß Formel III a gebunden sein, sondern auch noch über die Gruppierungen 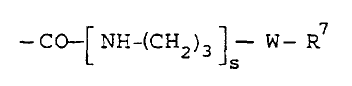 oder -CO-O-(CH₂)_{z}-W-R⁷, wobei R⁷ vorzugsweise = R¹ bedeutet und s = 1 oder 2 und z = 0 bis 4 sein können.

R⁷ kann außerdem noch 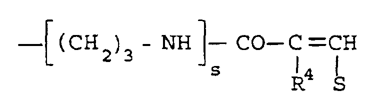 oder 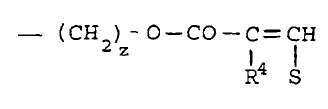 sein.

Hierbei handelt es sich um die entsprechenden difunktionellen Ethylenverbindungen entsprechend der Formal III a, die über die entsprechenden Amid- oder Estergruppierungen miteinander verknüpft sind und wobei nur eine Ethylengruppe copolymerisiert wurde.

Ähnlich verhält es sich auch mit den Verbindungen gemäß Formel III a mit T = -(CH₂)_{z}-V-(CH₂)_{z}-CH=CH-R¹, wobei z = 0 bis 4, V entweder ein Polydimethylsiloxan-Rest W oder ein -O-CO-C₆H₄-CO-O-Rest sein kann und R¹ die oben angegebene Bedeutung besitzt. Diese Verbindungen leiten sich von den entsprechenden Dialkenyl-phenyl-dicarbonsäureestern oder Dialkenyl-polydimethylsiloxan-Derivaten ab.

Es ist im Rahmen der vorliegenden Erfindung auch möglich, dass nicht nur eine, sondern beide Ethylengruppen der difunktionellen Ethylenverbindungen copolymerisiert wurden. Dies entspricht im wesentlichen den Baugruppen entsprechend der Formel III b, 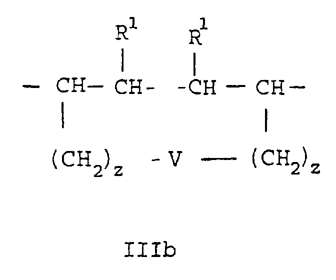 wobei R¹, V und z die obengenannte Bedeutung besitzen.

Besonders bevorzugt im Sinne der vorliegenden Erfindung ist die Verwendung zur Herstellung wässriger oder colöserhaltiger Pigmentkonzentrate, wobei man die Copolymere in Mengen von 0,1 bis 200 Gew.-%, bezogen auf das Pigment einsetzt.

Es ist erfindungsgemäß bevorzugt, wenn die Copolymere aus 10 bis 90 Mol-% Baugruppen der Formel I a und/oder I b, 1 bis 89 Mol-% Baugruppen der Formel IIa und/oder IIb und 0,1 bis 10 Mol-% Baugruppen der Formel III a und/oder III b bestehen. Besonders bevorzugt bestehen die Copolymere aus 40 bis 55 Mol-% Baugruppen der Formal I a und/oder I b, 40 bis 55 Mol-% Baugruppen der Formel II a und/oder II b und 1 bis 5 Mol-% Baugruppen der Formal III a und/oder III b. Gemäß einer bevorzugten Ausführungsform enthalten die erfindungsgemäßen Copolymere zusätzlich noch bis zu 50 Mol-%, insbesondere bis zu 20 Mol-%, bezogen auf die Summe der Baugruppen a), b) und c), Baugruppen, deren Monomer ein Vinyl-, Acrylsäure- oder Methacrylsäure-Derivat darstellt.

Vorzugsweise leiten sich die monomeren Vinylderivate von einer Verbindung ab, die ausgewählt ist aus der Gruppe Styrol, Ethylen, Propylen, Isobuten oder Vinylacetat. Als bevorzugtes monomeres Acrylsäurederivat leiten sich die zusätzlichen Baugruppen insbesondere von Acrylsäure, Methylacrylat oder Butylacrylat ab. Als bevorzugtes monomeres Methacrylsäure-Derivat ist Methacrylsäure, Methylmethacrylat, Butylmethacrylat und Hydroxyethylmethacrylat anzusehen.

Ein besonderer Vorteil der erfindungsgemäß eingesetzten Copolymere besteht darin, dass man die Stoffmengen-Anteile der Struktureinheiten a) bis c) derart einstellen kann, dass bei den entsprechenden Copolymeren ein ausgewogenes Verhältnis von polaren zu unpolaren Gruppierungen resultiert, wodurch eine gezielte Kontrolle der oberflächenaktiven Eigenschaften der entsprechenden Produkte möglich ist; insbesondere die Neigung zur Stabilisierung eingetragener Luft in wäßrigen Formulierungen kann durch Auswahl und Anteil des Strukturelements c) beliebig gesteuert werden.

Die Anzahl der sich wiederholenden Strukturelemente ist nicht eingeschränkt, doch hat es sich als besonders vorteilhaft erwiesen, die Anzahl der Strukturelemente so einzustellen, dass die Copolymere eine mittlere Molekularmasse von 1000 bis 2000000 aufweisen, wobei sich die gewünschte Molekularmasse in erster Linie nach dem Anwendungsgebiet richtet.

Die wässrigen Zubereitungen der erfindungsgemäß eingesetzten Copolymeren weisen aufgrund des Wechsels von hydrophilen und hydrophoben Gruppen in der makromolekularen Struktur einen Trübungspunkt auf, der bevorzugt zwischen 20 und 98 °C liegt und vorzugsweise durch den Anteil des Strukturelements c) beliebig gesteuert werden kann.

Die Herstellung der erfindungsgemäß eingesetzten Copolymere kann auf verschiedenen Wegen erfolgen. Bevorzugt ist hierbei, dass man 10 bis 90 Mol-% eines ungesättigten Dicarbonsäurederivats, 1 bis 89 Mol- % eines Oxyalkylenglykol-Alkylenethers oder Polyalkylenoxid-Alkenylethers und 0,1 bis 10 Mol-% einer vinylischen Polyalkylenglykol-, Polyalkylenoxid-, Polysiloxan- oder Ester-Verbindung mit Hilfe eines radikalischen Starters polymerisiert.

Als ungesättigtes Carbonsäurederivat, welches zu den Baugruppen der Formel I a bzw. I b führt, werden vorzugsweise Maleinsäure, Maleinsäuremonoester, Maleinsäuremonoamide, Maleinsäureureide, Maleinsäureimide sowie Maleinsäureanhydrid oder Umsetzungsprodukte mit Diaminen, welche ggf. zu aminoxidgruppenhaltigen Derivaten oxidiert wurden, aber auch Fumarsäure eingesetzt. Aufgrund ihrer hydrolytischen Stabilität in wässrigen Zubereitungen werden besonders bevorzugt Copolymere auf Basis von Maleinsäure, Maleinsäuremonoamiden und -ureiden verwendet.

Anstelle der Maleinsäure oder Fumarsäure können auch deren einoder zweiwertige Metallsalze, vorzugsweise Natrium-, Kalium-, Calcium- oder Magnesiumsalze, deren Ammoniumsalze oder deren Salze mit einem organischen Aminrest verwendet werden.

Als Maleinsäuremonoester wird vor allem ein Esterderivat eingesetzt, dessen alkoholische Komponente ein Polyalkylenglykolderivat oder Polyalkylenoxidderivat der allgemeinen Formel:

HO- (CₘHₗₘO)ₙ--(CₘHₗₘO)ₒ-R¹

ist, wobei R¹ = H, ein aliphatischer Kohlenwasserstoffrest mit 1 bis 20 C-Atomen (linear oder verzweigt sowie gesättigt oder auch ungesättigt), ein cycloaliphatischer Kohlenwasserstoff mit 5 bis 8 C-Atomen, ein Arylrest mit 6 bis 14 C-Atomen, der gegebenenfalls substituiert sein kann, 1 = 1 oder 2, m = 2 bis 18, sowie n = 0 bis 100 und o = 0 bis 100 sein kann.

Die bevorzugten Substitutionen am Arylrest sind Hydroxyl-, Carboxyl- oder Sulfonsäuregruppen. Im Falle der Malein- oder Fumarsäuremonoamide sind die Reste R² der Gruppierung -NR²₂ mit R¹ identisch. Die ungesättigten Dicarbonsäurederivate werden vorzugsweise in einer Menge von 40 bis 55 Mol-% verwendet.

Die zweite erfindungsgemäße Komponente zur Herstellung der erfindungsgemäßen Copolymeren stellt ein Oxyalkylenglykol-Alkenylether oder Polyalkylenoxid-Alkenylether dar, der vorzugsweise in einer Menge von 40 bis 55 Mol-% eingesetzt wird. Bei den bevorzugten Oxyalkylenglykol-Alkenylethern oder Polyalkylenoxid-Alkenylethern entsprechend den Formeln IV a und IV b 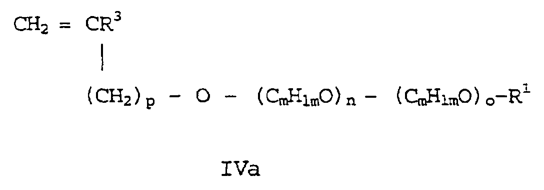 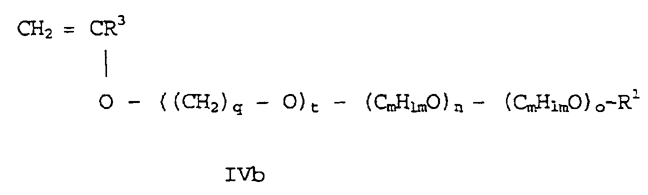 bedeuten R³ wiederum Wasserstoff oder ein aliphatischer Kohlenwasserstoffrest mit 1 bis 5 C-Atomen (der ebenfalls linear oder verzweigt bzw. auch ungesättigt sein kann); p kann Werte zwischen 0 und 3 annehmen, q = 0 bis 6, t = 0 bis 3 und R¹, l, m, n und o besitzen die oben genannte Bedeutung. Gemäß einer bevorzugten Ausführungsform bedeuten in Formel IIa p = 0, 1 = 2 und m = 2 oder 3, so dass es sich um Baugruppen handelt, die sich vom Polyethylenglykol- oder Polypropylenglykol-Vinylether ableiten.

Als dritte erfindungswesentliche Komponente zur Einführung der Baugruppen c) wird vorzugsweise 1 bis 5 Mol-% einer vinylischen Polyalkylenglykol-, Polyalkylenoxid-, Polysiloxan- oder Ester-Verbindung eingesetzt. Als bevorzugte vinylische Polyalkylenglykol-Verbindung oder Polyalkylenoxid-Verbindung werden Derivate entsprechend der Formel V verwendet, 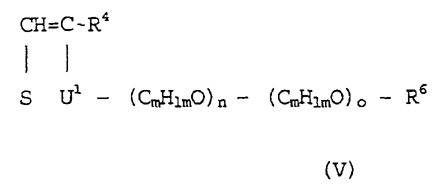 wobei S vorzugsweise -H oder COOMₐ und U¹ = -CO-NH-, -O- oder -CH₂O- sein können, d. h. es handelt sich um die Säureamid-, Vinyl- oder Allylether der entsprechenden Polyalkylenglykoloder Polyalkylenoxid-Derivate. Die Werte sind für 1 = 1 oder 2, m = 2 bis 18, sowie n = 0 bis 100 und o = 0 bis 100. R⁶ kann entweder wiederum R¹ sein oder 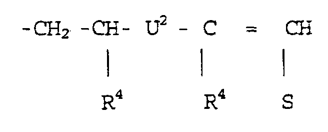 bedeuten, wobei U² = -NH-CO-, -O- sowie -OCH₂- und S = -COOMₐ und vorzugsweise -H ist.

Im Falle von R⁶ = R¹ und R¹ vorzugsweise H handelt es sich um die Polyalkylenglykol- oder Polyalkylenoxid-Monoamide bzw. Ether der entsprechenden Acryl- (S = H, R⁴ = H), Methyacryl-(S = H, R⁴ = CH₃) oder Maleinsäure- (S = COOMₐ, R⁴ = H) -Derivate. Beispiele für solche Monomere sind Maleinsäure-N-(methylpolypropylenglykol-)monoamid, Maleinsäure-N-(methoxy-polypropylenglykol-polyethylenglykol-)monoamid, Polypropylenglykolvinylether und Polypropylenglykolallylether.

Im Falle von R⁶ ≠ R¹ handelt es sich um bifunktionelle Vinylverbindungen, deren Polyalkylenglykol- oder Polyalkylenoxid-Derivate über Amid- oder Ethergruppen (-O- bzw. -OCH₂-) miteinander verbunden sind. Beispiele für solche Verbindungen sind Polypropylenglykol-bis-maleinamidsäure, Polypropylenglykoldiacrylamid, Polypropylenglykoldimethacrylamid, Polypropylenglykoldivinylether, Polypropylenglykoldiallylether.

Als bevorzugte vinylische Polysiloxanverbindung werden Derivate entsprechend der Formel VI verwendet, 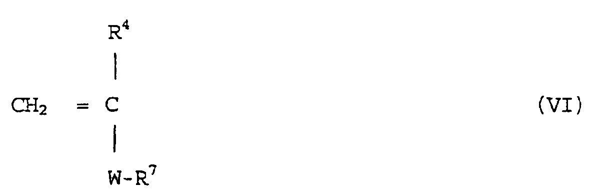 wobei R⁴ = -H und CH₃,
W= 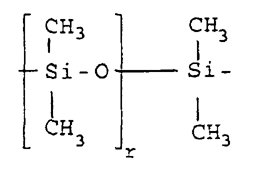 und r = 2 bis 100 und R⁷ bevorzugt = R¹ ist. Beispiele für solche Monomere sind Monovinylpolydimethylsiloxane.

Als weitere vinylische Polysiloxan-Verbindung kommen Derivate entsprechend der Formel VII in Frage, 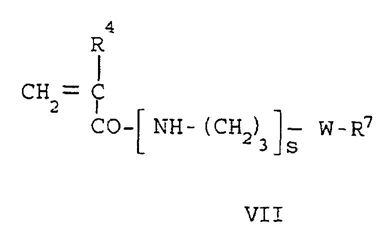 wobei s = 1 oder 2 sein kann, R⁴ und W die oben genannte Bedeutung besitzen und R⁷ entweder = R¹ oder aber 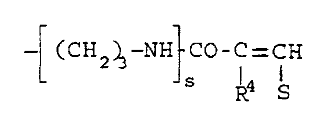 sein kann und S vorzugsweise Wasserstoff darstellt.

Beispiele für solche Monomere mit einer Vinylfunktion (R⁷ = R¹) sind Polydimethylsiloxanpropylmaleinamidsäure oder Polydimethylsiloxandipropylenaminomaleinamidsäure. Im Falle von R⁷ ≠ R¹ handelt es sich um Divinylverbindungen, wie z. B. Polydimethylsiloxan-bis-(propylmaleinamidsäure) oder Polydimethylsiloxan-bis-(dipropylenaminomaleinamidsäure).

Als weitere vinylische Polysiloxanverbindung kommt ein bevorzugtes Derivat entsprechend der Formel VIII in Frage, 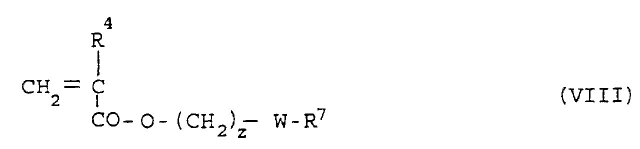 wobei z 0 bis 4 sein kann und R⁴ bzw. W die oben genannte Bedeutung besitzen. R⁷ kann entweder R¹ oder aber 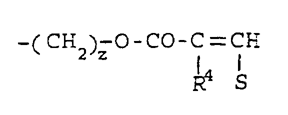 sein, wobei S bevorzugt Wasserstoff bedeutet. Beispiele für solche monovinylischen Verbindungen (R⁷ = R¹) sind Polydimethylsiloxan-(1-propyl-3-acrylat) oder Polydimethylsiloxan-(1-propyl-3-methacrylat).

Im Falle von R⁷ ≠ R¹ handelt es sich um Divinylverbindungen, wie z. B. Polydimethylsiloxan-bis-(1-propyl-3-acrylat) oder Polydimethylsiloxan-bis-(1-propyl-3-methacrylat).

Als vinylische Esterverbindung im Rahmen der vorliegenden Erfindung werden vorzugsweise Derivate entsprechend der Formel IX eingesetzt, 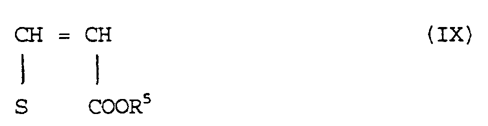 wobei S = COOMₐ oder -COOR⁵ bedeuten und R⁵ ein aliphatischer Kohlenwasserstoffrest mit 3 bis 20 C-Atomen, ein cycloaliphatischer Kohlenwasserstoffrest mit 5 bis 8 C-Atomen sowie ein Arylrest mit 6 bis 14 C-Atomen sein kann. a und M besitzen die oben genannte Bedeutung. Beispiele für solche Esterverbindungen sind Di-n-butylmaleinat bzw. -fumarat oder Mono-n-butyl-maleinat- bzw. -fumarat.

Des weiteren können auch Verbindungen entsprechend der Formel X eingesetzt werden, 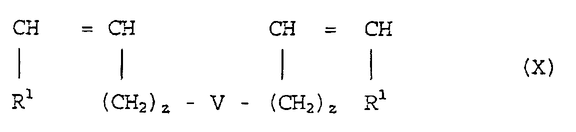 wobei z wiederum 0 bis 4 sein kann und R¹ die bereits bekannte Bedeutung besitzt. V kann hierbei W (also eine Polydimethylsiloxan-Gruppierung) sein, was einer Dialkenylpolydimethylsiloxan-Verbindung, wie z. B. Divinylpolydimethylsiloxan, entspricht. Alternativ hierzu kann V auch

- O-CO-C₆H₄-CO-O-

sein. Diese Verbindungen stellen Dialkenylphthalsäurederivate dar. Ein typisches Beispiel für solche Phthalsäure-Derivate ist Diallylphthalat.

Die Molekularmassen der Verbindungen, welche die Baugruppe c) bilden, können in weiteren Grenzen variiert werden und liegen vorzugsweise zwischen 150 und 10 000.

Gemäß einer bevorzugten Ausführungsform werden noch bis zu 50 Mol-%, insbesondere bis zu 20 Mol-%, bezogen auf die Monomeren mit den Baugruppen gemäß den Formeln I, II und III eines Vinyl-, Acrylsäure- oder Methacrylsäure-Derivates einpolymerisiert. Als monomeres Vinylderivat findet bevorzugt Styrol, Ethylen, Propylen, Isobuten oder Vinylacetat Verwendung, als monomeres Acrylsäurederivat wird bevorzugt Acrylsäure, Methylacrylat oder Butylacrylat eingesetzt, während als monomere Methacrylatsäure-Derivate schließlich bevorzugt Methacrylsäure, Methylmethacrylat, Butylmethacrylat und Hydroxyethylmethacrylat herangezogen werden.

Die genannten Copolymere können nach den üblichen Verfahren hergestellt werden. Ein besonderer Vorteil besteht darin, dass man vorzugsweise ohne Lösemittel oder aber in wässriger Lösung arbeiten kann. In beiden Fällen handelt es sich um drucklose und daher sicherheitstechnisch unbedenkliche Reaktionen.

Wird das Verfahren in wässriger Lösung durchgeführt, so erfolgt die Polymerisation bei 20 bis 100 °C mit Hilfe eines üblichen Radikalstarters, wobei die Konzentration der wässrigen Lösung vorzugsweise auf 30 bis 50 Gew.-% eingestellt wird. Gemäß einer bevorzugten Ausführungsform kann die radikalische Polymerisation hierbei im sauren pH-Bereich durchgeführt werden, insbesondere bei einem pH-Wert zwischen 4,0 und 6,5, wobei auf die herkömmlichen Initiatoren wie H₂O₂ zurückgegriffen werden kann, ohne dass es zu einer befürchteten Etherspaltung kommt, wodurch die Ausbeute sehr stark beeinträchtigt würde.

Beim dem Verfahren wird vorzugsweise so gearbeitet, dass das ungesättigte Dicarbonsäure-Derivat in teilneutralisierter Form in wässriger Lösung, bevorzugt zusammen mit dem Polymerisationsinitiator, vorgelegt wird und die übrigen Monomere zudosiert werden, sobald die erforderliche Reaktionstemperatur in der Vorlage erreicht ist.

Separat zugegeben werden die Polymerisations-Hilfsmittel, welche die Aktivierungsschwelle des vorzugsweise peroxidischen Initiators senken können, so dass die Copolymerisation bei relativ niedrigen Temperaturen ablaufen kann. Gemäß einer weiteren bevorzugten Variante kann sowohl das ungesättigte Dicarbonsäure-Derivat als auch der Radikalbildner in separaten oder gemeinsamen Zuläufen der Reaktorvorlage zudosiert werden, wodurch das Problem der Wärmeabführung in idealer Weise gelöst werden kann.

Die Art der verwendeten Polymerisationsinitiatoren, -aktivatoren und sonstiger Hilfsmittel, wie z. B. Molekulargewichtsregler, ist relativ unproblematisch, d. h. als Initiatoren kommen die üblichen Radikalspender zum Einsatz, wie Wasserstoffperoxid, Natrium-, Kalium- oder Ammoniumperoxodisulfat, tert. Butylhydroperoxid, Dibenzoylperoxid, Natriumperoxid, 2,2'-Azobis-(2-amidino-propan)-dihydrochlorid, Azobis-(isobutyronitril) usw. Kommen Redoxsysteme zum Einsatz, so werden oben genannte Initiatoren mit reduzierend wirkenden Aktivatoren kombiniert. Beispiel für derartige Reduktionsmittel sind Fe(II)-salze, Natriumhydroxymethansulfinat-Dihydrat, Alkalimetallsulfite und -metabisulfite, Natriumhypophosphit, Hydroxylaminhydrochlorid, Thioharnstoff usw.

Ein besonderer Vorteil der Copolymere ist die Tatsache, dass sie auch ohne Lösemittel hergestellt werden können, was mit Hilfe der üblichen radikalischen Starter bei Temperaturen zwischen 60 und 150 °C erfolgen kann. Diese Variante kann aus wirtschaftlichen Gründen insbesondere dann angewendet werden, wenn die Copolymeren in wasserfreier Form direkt ihrer Verwendung zugeführt werden sollen, weil dann eine aufwendige Abtrennung des Lösemittels, insbesondere des Wassers beispielsweise durch Sprühtrocknung entfallen kann.

Die erfindungsgemäß eingesetzten Copolymere sind besonders vorteilhaft zur Herstellung wässriger und lösemittelfreier Pigmentpräparationen, die gute Einarbeitung der Pigmente, vorteilhafte Rheologie-Profile, Sedimentverhinderung, hohe Farbstärke, hohe Homogenität und Flockulationsstabilität bei Pigmentmischungen, hohe Glanzgrade, hohes Deckvermögen (oder wenn gewünscht hohe Transparenz) sowie besonders herausragende Lagerstabilität der wässrigen Zubereitungen und Bewitterunasstabilität aufweisen.

Zur Herstellung wässriger Pigmentpasten werden insbesondere 0,1 bis 200 Gew.-% der Copolymere, vorzugsweise 0,5 bis 50 Gew.-% (bezogen auf das Gewicht der Pigmente), eingesetzt. Die Copolymere können entweder vorab mit den zu dispergierenden Pigmenten vermischt werden oder direkt dem Dispergiermedium (Wasser, eventuelle Glycolether-Zusätze) vor oder gleichzeitig mit der Zugabe der Pigmente und etwaiger anderer Feststoffe gelöst werden.

Die vorliegende Erfindung betrifft weiterhin ein Verfahren zur Herstellung wässriger, hochkonzentrierter, pump- und fließfähiger Pigmentpräparationen, das dadurch gekennzeichnet ist, dass man das erfindungsgemäß zu verwendende Polymer, gegebenenfalls in Kombination mit wenigstens einer weiteren Komponente, mit Wasser vermischt, in dieser Mischung das Pigment unter Rühren einstreut und bis zur Erzielung der gewünschten Feinheit und Konsistenz der Suspension dispergiert. Ein weiteres Verfahren zur Herstellung der erfindungsgemäßen Pigmentpräparationen besteht darin, ein Pigment mit den erfindungsgemäßen Copolymeren zunächst trocken zu vermischen, wobei eine pulverförmige Pigmentzubereitung resultiert. Diese kann bei Bedarf in Wasser dispergiert werden, wobei die erfindungsgemäße Pigmentpräparation erhalten wird. Ein drittes erfindungsgemäßes Verfahren zur Herstellung wässriger, hochkonzentrierter, pump- und fließfähiger Pigmentsuspensionen und -pasten besteht darin, einen wässrig-feuchten Pigmentfilterkuchen mit dem Copolymer zu versetzen und beispielsweise mit einem Dissolver in den Pigmentfilterkuchen einzuarbeiten, wobei dieser sich verflüssigt.

Als Beispiele für zu dispergierende Pigmente seien genannt:

| | |
|---|---|
| - Monoazopigmente: | C.I. Pigment Brown 25; |
| | C.I. Pigment Orange 5, 36 und 67; |
| | C.I. Pigment Red 1, 2 , 3, 48:4, 49, 52:2, |
| | 53, 57:1, 251, 112, 170 und 184; |
| | C.I. Pigment Yellow 1, 3, 73, 74, 65, |
| | 97,151 und 183; |
| - Diazopigmente: | C.I. Pigment Orange 34; |
| | C.I. Pigment Red 144 und 166 |
| | C.I. Pigment Yellow 12, 13, 17, 83, |
| | 113 und 126; |
| | |
| - Anthrachinonpigmente: | C.I. Pigment Yellow 147 und 177; |
| | C.I. Pigment Violet 31; |
| | |
| - Anthrapyrimidinpigmente: | C.I. Pigment Yellow 108; |
| | |
| - Chinacridonpigmente: | C.I.Pigment Red 122,202 und 20; |
| | C.I.Pigment Violet 19; |
| | |
| - Chinophthalonpigmente: | C.I.Pigment Yellow 138; |
| | |
| - Dioxazinpigmente: | C.I.Pigment Violet 23 und 27; |
| | |
| - Flavanthronpigmente: | C.I. Pigment Yellow 24; |
| | |
| - Indanthronpigmente:C.I. | Pigment Blue 60 und 64; |
| | |
| - Isoindolinpigmente:C.I. | Pigment Orange 69; |
| | C.I. Pigment Red 260; |
| | C.I. Pigment Yellow 139; |
| - Isoindolinonpigmente: | C.I. Pigment Orange 61; |
| | C.I. Pigment Red 257 und 260 |
| | C.I. Pigment Yellow 109, 110, 173 und |
| | 185; |
| | |
| - Metallkomplexpigmente: | C.I. Pigment Yellow 117 und 153; |
| | |
| - Perinonpigmente: | C.I. Pigment Orange 43; |
| | C.I. Pigment Red 194; |
| | |
| - Perylenpigmente: | C.I. Pigment Black 31 und 32; |
| | C.I. Pigment Red 123, 149, 178, 179, |
| | 190 und 224; |
| | C.I. Pigment Violet 29; |
| | |
| - Phtalocyaninpigmente: | C.I. Pigment Blue 15, 15:1, 15:2, |
| | 15:3, 15:4,15:6 und 16; |
| | C.I. Pigment Green 7 und 36; |
| | |
| - Pyranthronpigmente:C.I. | Pigment Orange 51; |
| | C.I. Pigment Red 216; |
| | |
| - Thioindigopigmente:C.I. | Pigment Red 88; |
| | |
| - Triphenylmethanpigmente: | C.I. Pigment Blue 1,61, und 62; |
| | C.I. Pigment Green 1; |
| | C.I. Pigment Red 81 und 169; |
| | C.I. Pigment Violet 2 und 3; |
| - C.I. Pigment Black 1 (Anilinschwarz) | |
| | |
| - C.I.Pigment Yellow 101 (Aldazingelb) | |
| - Anorganische Pigmente: | |
| | |
| - Weißpigmente: | Titandioxid (C.I. Pigment White 6), Zinkweiß, Farbenzinkoxid; Zinksulfid, Lithopone; Bleiweiß; |
| | |
| - Schwarzpigmente: | Eisenoxidschwarz (C.I. Pigment Black 11), Eisen-Mangan- Schwarz, Spinellschwarz (C.I.Pigment Black 27); Ruß (C.I. Pigment Black 7); |
| | |
| - Buntpigmente: | Chromoxid, Chromoxidhydratgrün; Chromgrün (C.I. Pigment Green 48); Cobaltgrün (C.I.Pigment Green 50); Ultramaringrün; |
| | Kobaltblau (C.I. Pigment Blue 28 und 36); Ultramarinblau; Eisenblau (C.I. Pigment Blue 27); Manganblau; |
| | Ultramarinviolett; Kobalt- und Manganviolett; |
| | Eisenoxidrot (C.I. Pigment Red 101); Cadmiumsulfoselenid (C.I. Pigment Red 108); Molybdatrot (C.I. Pigment Red 104); Ultramarinrot; |
| | Eisenoxidbraun, Mischbraun, Spinellund Korundphasen (C.I. Pigment Brown 24, 29 und 31), Chromorange; |
| | Eisenoxidgelb (C.I. Pigment Yellow 42); Nickeltitangelb (C.I. Pigment Yellow 53; C.I. Pigment Yellow 157 und 164); Chromtitangelb, Cadmiumsulfid und Cadmiumzinksulfid, (C.I. Pigment |
| | Yellow 37 und 35); Chromgelb (C.I. Pigment Yellow 34), Zinkgelb, Erdalkalichromate, Neapelgelb, Bismutvanadat (C.I. Pigment Yellow 184) ; |
| | |
| - Glanzpigmente: | Metalleffektpigmente auf Basis metalloxidbeschichteter Metallplättchen; Perglanzpigmente auf der Basis metalloxidbeschichteter Glimmerplättchen. |

Füllstoffe, die beispielsweise in wässrigen Lacken dispergiert werden können, sind z.B. solche auf Basis von Kaolin, Talkum, anderen Silikaten, Kreide, Glasfasern, Glasperlen oder Metallpulvern.

Als Lacksysteme, in denen die erfindungsgemäßen Pigmentpräparationen aufgelackt werden können, kommen beliebige wässrige 1K- oder 2K-Lacke in Betracht. Beispielhaft genannt seien wässrige 1K-Lacke, wie beispielsweise solche auf Basis von Alkyl-, Acrylat-, Epoxid-, Polyvinylacetat-, Polyesteroder Polyurethanharzen, oder wässrige 2K-Lacke, beispielsweise solche auf Basis von hydroxylgruppenhaltigen Polyacrylat- oder Polyesterharzen mit Melaminharzen oder gegebenenfalls blockierten Polyisocyanatharzen als Vernetzer. In gleicher Weise seien auch Polyepoxidharzsysteme genannt.

Wasser ist das bevorzugte Lösemittel für die erfindungsgemäß einzusetzenden Copolymere. Aber auch organische Lösemittel wie beispielsweise Glycolether oder -ester können allein oder im Gemisch mit Wasser verwendet werden. Insbesondere für das Antrocknungsverhalten der mittels der erfindungsgemäßen Copolymere hergestellten Pigmentpasten ist der Zusatz von Lösemitteln gegebenenfalls vorteilhaft.

Zur Herstellung der erfindungsgemäßen Pigmentpasten kann zudem auch der Zusatz weiterer nicht-erfindungsgemäßer, wasserdispergierbarer Polymere wie beispielsweise von Polyacrylat-, Polyurethan- oder Polysiloxanderivaten erfolgen.

Bei der Herstellung der erfindungsgemäßen Pigmentkonzentrate können zudem weitere Hilfsmittel wie Entschäumer, Konservierungshilfsmittel, Netzmittel, Entlüfter oder dem Stand der Technik entsprechende Anti-Settling-Mittel, Wachse oder Rheologieadditive Verwendung finden.

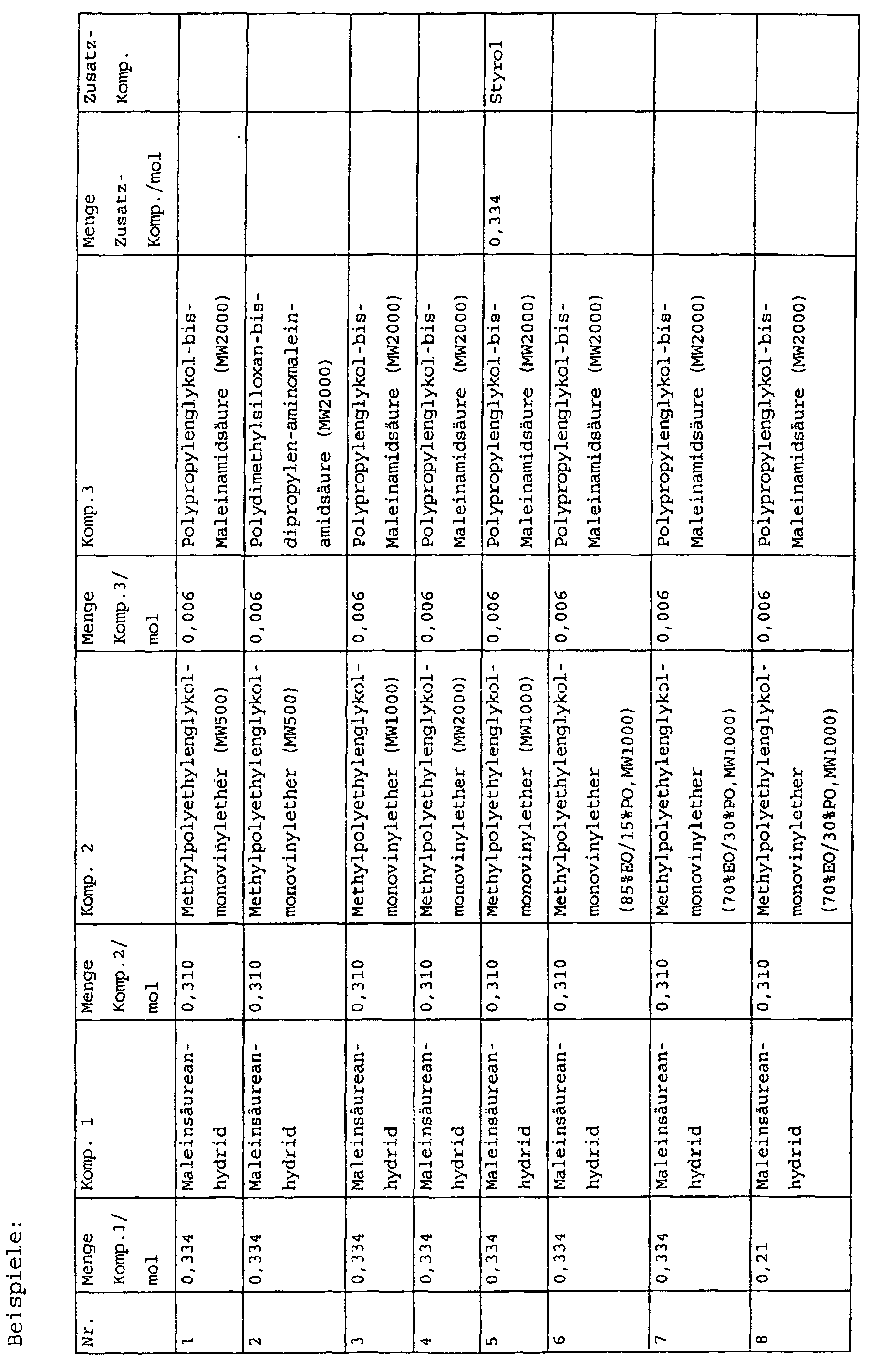

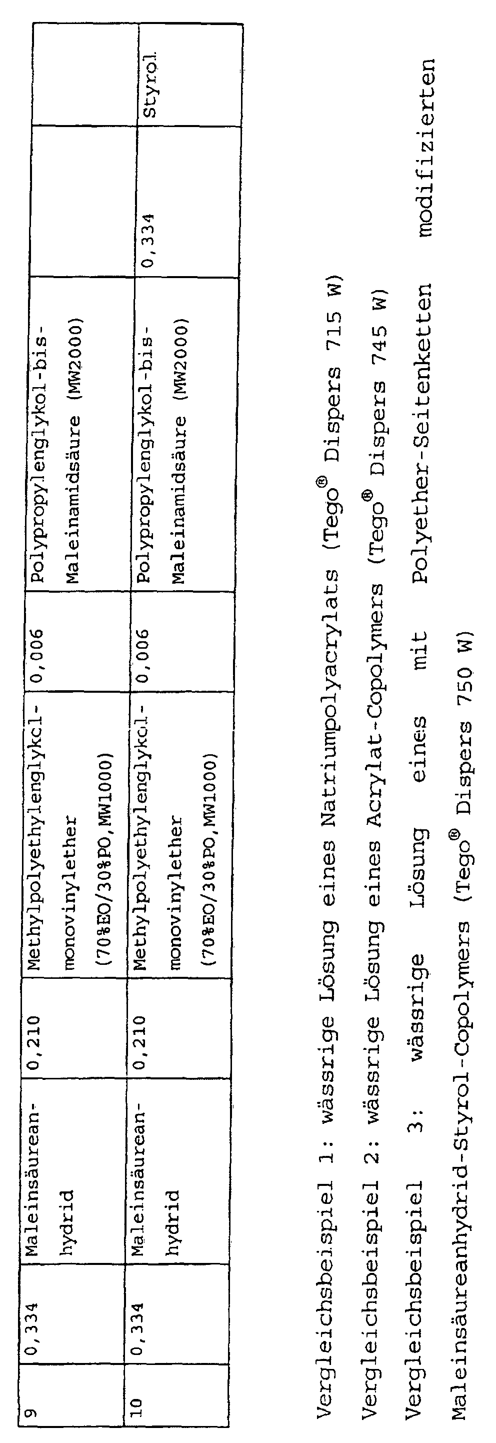

### Herstellungsbeispiel 1:

In einem Reaktionsgefäß mit Thermometer, Rührer, Rückflusskühler und zwei Anschlüssen für separate Zuläufe wurden 270 g Wasser vorgelegt. Unter Rühren wurden 32,7 g Maleinsäureanhydrid und 25,0 g 50%ige wässrige Natronlauge zugesetzt, wobei die Temperatur durch Kühlen unter 30 °C gehalten wurde. Anschließend wurden 100 mg Eisensulfat-Heptahydrat sowie 18,5 g 30%iges Wasserstoffperoxid unter Rühren zugegeben und aus separaten Zulaufgefäßen eine Lösung aus 5,1 g Natriumhydroxymethansulfinat-Dihydrat und 12,5 g Wasser (Zulauf 1) einerseits über 75 Minuten und eine Lösung aus 155 g Methylpolyethylenglykol-monovinylether und 12,1 g Polypropylenglykol-bis-maleinamidsäure (Zulauf 2) andererseits über 60 Minuten zugegeben.

Nach beendeter Zugabe wurde noch 30 Minuten bei 35 °C gerührt und das Reaktionsgemisch auf 25 °C abgekühlt. Durch Zugabe von 20%iger wässriger Natronlauge wurde ein pH-Wert von 7,60 eingestellt. Es wurde eine gelb gefärbte, leicht trübe wässrige Zubereitung erhalten, die einen Feststoffgehalt von 37,4 Gew.-% aufwies.

### Herstellungsbeispiel 2:

Es wurde wie unter Beispiel 1 beschrieben verfahren, jedoch mit folgender Zusammensetzung des Zulaufs 2:
155,0 g Methylpolyethylenglykolmonovinylether und 7,4 g Polydimethylsiloxan-bis-dipropylenaminomaleinamidsäure. Das Reaktionsgemisch wies nach beendeter Zugabe einen pH-Wert von 5,02 auf und wurde mit 20%iger wässriger Natronlauge (58,3 g) neutralisiert. Im Endprodukt wurden 35,5 Gew-% Feststoff gefunden.

Die Herstellung der Beispiele 3-10 erfolgte in analoger Weise oder nach dem Stand der Technik entsprechenden Verfahren.

### Herstellung der Pigmentpasten:

Zur Herstellung der Pigmentpasten wurden die erfindungsgemäßen und nichterfindungsgemäßen Dispergieradditive 40%ig in Wasser vorgelöst, mit Wasser und Hilfsstoffen gemischt und danach die Pigmente zugegeben. Die Dispergierung erfolgte nach Zugabe von Mahlkörpern (Glaskugeln 2-3 mm, gleiches Volumen wie die Pigmentpaste) 1 h (Titandioxid) bzw. 2 h (sonstige Pigmente) in einem Skandex-Rüttler mit Luftkühlung.

### Formulierung der Weißpasten (Titandioxid):

Die Weißpasten wurden wie folgt formuliert (Angaben in Gew-%) :

| | |
|---|---|
| 16,4 | Wasser |
| 12,3 | Additiv-Lösung, 40%ig |
| 1,0 | Entschäumer (Tego® Foamex 810, Tego Chemie Service GmbH) |
| 70,0 | Titandioxid 2160 (Kronos) |
| 0,3 | Aerosil7 A 200 (Degussa) |

### Formulierung der Schwarzpasten (Ruß):

Die Schwarzpasten wurden wie folgt formuliert (Angaben in Gew -%) :

| | |
|---|---|
| 60,3 | Wasser |
| 22,3 | Additiv-Lösung, 40%ig |
| 1,0 | Entschäumer (Tego® Foamex 810 oder Tego® Foamex 830, Tego Chemie Service GmbH) |
| 1,4 | AMP 90 (Angus) |
| 15,0 | Farbruß FW 200 (Degussa) |

### Formulierung der Eisenoxidrot-Pasten (Eisenoxid) :

Die Eisenoxid-Pasten wurden wie folgt formuliert (Angaben in Gew-%)

| | |
|---|---|
| 40,0 | Wasser |
| 24,0 | Additiv-Lösung, 40%ig |
| 1,0 | Entschäumer (Tego® Foamex 810 oder Tego® Foamex 830, Tego Chemie Service GmbH) |
| 35,0 | Sicotrans® 2817 (BASF) |

### Prüflacke:

Einbrenn-Klarlack auf Basis eines modifizierten Alkydharzes (Angaben in Gew.%)

| | |
|---|---|
| 70,88 | Resydrol® VWA 5477, 40%ig (Hoechst) |
| 0,14 | Entschäumer (Tego® Foamex 810 oder Tego® Foamex 830, Tego Chemie Service GmbH) |
| 0,68 | Bentone® SD 1 (Rheox) |
| 8,24 | Maprenal® MF 900 (Hoechst) |
| 0,14 | Triethanolamin |
| 19,10 | Wasser |
| 0,68 | Additol® XW 395 (Hoechst) |
| 0,14 | Additiol® XW 329 |

Position 1 vorlegen und die anderen Komponenten unter Rühren zugeben.

### Dispersions-Klarlack:

| | |
|---|---|
| 97,0 | Neocryl® XK 90 (Zeneca) |
| 3,0 | Texanol® |

Zur Herstellung pigmentierter Lacke wurden je 40,0 g Klarlack vorgelegt und Weißpaste + Buntpaste im Verhältnis 25:1 (Feststoffe) oder 4,5 g der Eisenoxid-Paste zugegeben und homogenisiert. Die Proben wurden mit 100 µm Naßfilmdicke aufgerakelt und entweder nach 20 min Ablüftzeit 15 min bei 150 °C eingebrannt (Einbrennlack) oder bei Raumtemperatur getrocknet (Dispersionslacke).

### Test der Pastenstabilitäten:

Zur Ermittlung der Pastenstabilitäten wurden bei zwei verschiedenen Schergefällen (20 l/s sowie 1000 l/s) die erreichbaren Anfangsviskositäten sowie die Viskositäten nach zehnwöchiger Lagerung bei 40°C bestimmt.

### Titandioxid-Paste :

| Beispiel | Viskosität /Pas sofort bei 20 l/s | Viskosität /Pas sofort bei 1000 l/s | Viskosität /Pas nach 10 W 40°C bei 20/ ls | Viskosität /Pas nach 10 W 40°C bei 1000 l/s |
|---|---|---|---|---|
| 1 | 0,64 | 0,13 | 0,84 | 0,28 |
| 2 | 0,68 | 0,17 | 0,82 | 0,33 |
| 3 | 0,65 | 0,16 | 0,78 | 0,32 |
| 4 | 0,68 | 0,19 | 0,77 | 0,30 |
| 5 | 0,58 | 0,12 | 0,73 | 0,29 |
| 6 | 0,59 | 0,14 | 0,74 | 0,27 |
| 7 | 0,58 | 0,13 | 0,77 | 0,26 |
| 8 | 0,64 | 0,16 | 0,79 | 0,30 |
| 9 | 0,63 | 0,15 | 0,81 | 0,32 |
| 10 | 0,65 | 0,17 | 0,80 | 0,31 |
| Vgl.1 | 0,78 | 0,16 | 1,33 | 0,57 |
| Vgl.2 | 0,73 | 0,16 | 1,35 | 0,59 |
| Vgl.3 | 0,76 | 0,18 | 1,28 | 0,55 |

### Ruß-Paste:

| Beispiel | Viskosität /Pas sofortbei 20 l/s | Viskosität /Pas sofortbei 1000 l/s | Viskosität /Pas nach 10 W 40°C bei 20/ ls | Viskosität /Pas nach 10 W 40°C bei 1000 l/s |
|---|---|---|---|---|
| 1 | 0,14 | 0,12 | 0,23 | 0,17 |
| 2 | 0,16 | 0,13 | 0,25 | 0,19 |
| 3 | 0,17 | 0,14 | 0,27 | 0,21 |
| 4 | 0,19 | 0,16 | 0,32 | 0,24 |
| 5 | 0,15 | 0,13 | 0,24 | 0,21 |
| 6 | 0,14 | 0,12 | 0,23 | 0,18 |
| 7 | 0,17 | 0,15 | 0,26 | 0,19 |
| 8 | 0,16 | 0,13 | 0,25 | 0,19 |
| 9 | 0,15 | 0,12 | 0,23 | 0,17 |
| 10 | 0,16 | 0,13 | 0,24 | 0,18 |
| Vgl.1 | 0,43 | 0,35 | 0,77 | 0,45 |
| Vgl.2 | 0,41 | 0,34 | 0,71 | 0,43 |
| Vgl.3 | 0,38 | 0,31 | 0,65 | 0,39 |

### Eisenoxidrot-Paste:

| Beispiel | Viskosität /Pas sofort bei 20 l/s | Viskosität /Pas sofort bei 1000 l/s | Viskosität /Pas nach 10 W 40°C bei 20/ ls | Viskosität /Pas nach 10 W 40°C bei 1000 l/s |
|---|---|---|---|---|
| 1 | 0,41 | 0,32 | 0,44 | 0,35 |
| 2 | 0,38 | 0,28 | 0,40 | 0,30 |
| 3 | 0,35 | 0,26 | 0,37 | 0,30 |
| 4 | 0,39 | 0,35 | 0,41 | 0,37 |
| 5 | 0,38 | 0,32 | 0,40 | 0,33 |
| 6 | 0,40 | 0,33 | 0,43 | 0,36 |
| 7 | 0,36 | 0,31 | 0,38 | 0,33 |
| 8 | 0,39 | 0,33 | 0,43 | 0,37 |
| 9 | 0,38 | 0,34 | 0,40 | 0,36 |
| 10 | 0,36 | 0,30 | 0,38 | 0,32 |
| Vgl.1 | 6,44 | 3,63 | 7,55 | 4,22 |
| Vgl.2 | 5,78 | 2,56 | 6,27 | 4,06 |
| Vgl.3 | 0,55 | 0,42 | 1,94 | 1,22 |

Aus dem jeweils nur geringen Viskositätsanstieg lässt sich die gute Stabilität der erfindungsgemäßen Pigmentpasten leicht erkennen. Bei der nichterfindungsgemäßen Verwendung von Copolymerisaten gemäß den Vergleichsbeispielen 1 bis 3 konnten keine lagerstabilen Pigmentkonzentrate formuliert werden. Hochpigmentierte Konzentrate mit transparentem Eisenoxid sind nur mit einigen erfindungsgemäßen Copolymeren fließfähig herstellbar.

### Test der Dispergiereigenschaften:

Die Testformulierungen wurden je einmal mit frischen und einmal mit 10 W bei 40°C gelagerten Pasten hergestellt, mit 100 µm Naßfilmdicke aufgezogen; nach sechsminütiger Trocknung erfolgte ein Rub-Out-Test auf 1/3 der beschichteten Fläche. Nach Einbrennen bzw. Trocknung über Nacht erfolgte nach jeweils 24 Stunden die farbmetrische Vermessung der Aufzüge mittels eines Spektralphotometers Typ XP 68 der Fa. X-Rite. Die Bestimmungen von Glanzgrad und -schleier erfolgten mittels des Haze-Gloss-Gerätes der Fa. Byk-Gardner, die Beurteilung der Transparenz erfolgte nach einem Schulnoten-System (1 = sehr gut, 2 = gut, 3 = befriedigend, 4 = ausreichend, 5 = mangelhaft und 6 = ungenügend).

### Coloristische Daten:

### Dispersions-System mit Weiß- und Schwarzpaste:

| | Sofort | | nach 10 W 40°C | |
|---|---|---|---|---|
| Beispiel | Glanz (20°) | Rub-Out | Glanz (20°) | Rub-Out |
| 1 | 63 | 0,5 | 61 | 0,5 |
| 2 | 61 | 0,6 | 60 | 0,5 |
| 3 | 64 | 0,4 | 62 | 0,4 |
| 4 | 62 | 0,4 | 62 | 0,4 |
| 5 | 67 | 0,4 | 66 | 0,4 |
| 6 | 62 | 0,5 | 61 | 0,6 |
| 7 | 61 | 0,4 | 62 | 0,4 |
| 8 | 63 | 0,4 | 61 | 0,3 |
| 9 | 64 | 0,5 | 63 | 0,4 |
| 10 | 68 | 0,4 | 67 | 0,4 |
| Vgl.1 | 50 | 1,2 | 42 | 1,6 |
| Vgl.2 | 55 | 0,9 | 43 | 1,4 |
| Vgl.3 | 61 | 0,5 | 58 | 0,9 |

### Einbrenn-System mit Weiß- und Schwarzpaste:

| | Sofort | | Nach 10 W 40°C | |
|---|---|---|---|---|
| Beispiel | Glanz (20°) | Rub-Out | Glanz (20°) | Rub-Out |
| 1 | 75 | 0,7 | 76 | 0,7 |
| 2 | 80 | 0,8 | 78 | 0,7 |
| 3 | 77 | 0,6 | 75 | 0,7 |
| 4 | 79 | 0,6 | 77 | 0,6 |
| 5 | 82 | 0,7 | 80 | 0,6 |
| 6 | 76 | 0,6 | 74 | 0,7 |
| 7 | 75 | 0,7 | 76 | 0,6 |
| 8 | 78 | 0,6 | 77 | 0,7 |
| 9 | 77 | 0,7 | 75 | 0,7 |
| 10 | 84 | 0,6 | 83 | 0,6 |
| Vgl.1 | 68 | 1,6 | 68 | 2,3 |
| Vgl.2 | 72 | 1,4 | 70 | 2,0 |
| Vgl.3 | 80 | 0,8 | 78 | 1,6 |

### Dispersions-System mit Eisenoxid-Rot-Paste:

| | Sofort | | Nach 10 W 40°C | |
|---|---|---|---|---|
| Beispiel | Glanz (20°) | Transparenz | Glanz (20°) | Transparenz |
| 1 | 72 | 1-2 | 70 | 1-2 |
| 2 | 74 | 1 | 72 | 1 |
| 3 | 73 | 1 | 74 | 1 |
| 4 | 72 | 1-2 | 73 | 1-2 |
| 5 | 77 | 1 | 75 | 1 |
| 6 | 74 | 1 | 73 | 1 |
| 7 | 73 | 1 | 74 | 1 |
| 8 | 75 | 1 | 74 | 1 |
| 9 | 73 | 1 | 72 | 1 |
| 10 | 76 | 1 | 74 | 1 |
| Vgl.1 | 64 | 3 | 56 | 3 |
| Vgl.2 | 66 | 3 | 59 | 3 |
| Vgl.3 | 71 | 2 | 66 | 2-3 |

Zu erkennen waren die durch den Einsatz der erfindungsgemäß eingesetzten Dispergieradditive erzielbaren günstigen Eigenschaften (auch nach Lagerung bei erhöhter Temperatur als Test für die Stabilität im wässrigen Medium).

| Prüfung der Wetterfestigkeit (durch Bestimmung des Glanzverlustes und der Farbtonverschiebung nach 250 h QUV-Test im lufttrocknenden Dispersionssystem mit Weiß- und Schwarzpaste) | | |
|---|---|---|
| Beispiel | Glanzverlust (Messung im 20°-Winkel) | Farbtonverschiebung DeltaE |
| 1 | 5 | 0,3 |
| 2 | 4 | 0,25 |
| 3 | 6 | 0,25 |
| 4 | 5 | 0,3 |
| 5 | 8 | 0,6 |
| 6 | 4 | 0,2 |
| 7 | 5 | 0,25 |
| 8 | 6 | 0,3 |
| 9 | 4 | 0,2 |
| 10 | 9 | 0,6 |
| Vgl.1 | 10 | 0,5 |
| Vgl.2 | 14 | 1,3 |
| Vgl.3 | 8 | 0,8 |

Die erfindungsgemäß eingesetzten Copolymere führten im Vergleich zu den Polymeren der Vergleichsbeispiele 1 bis 3 zu keiner Beeinträchtigung der Wetterfestigkeit der Lackfilme - Copolymeren, die frei von aromatischen Vinyl-Bausteinen waren, zeichneten sich durch eine sehr gute Vergilbungsstabilität aus.

## Patentansprüche

1. Verwendung von Copolymeren auf Basis von Oxyalkylenglykol- oder Polyalkylenoxid-Alkenylethern und ungesättigten Dicarbonsäure-Derivaten bestehend aus:
a) 10 bis 90 Mol-% Baugruppen der Formel Ia und/oder Ib 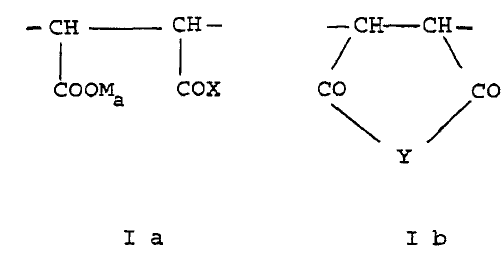 wobei
M = Wasserstoff, ein- oder zweiwertiges Metallkation, Ammoniumion, organischer Aminrest
a = 1 oder für den Fall, dass M ein zweiwertiges Metallkation ist, 1/2 ist,
X = -OMₐ oder -O- (CₘHₗₘO)ₙ--(CₘHₗₘO)ₒ-R¹,
wobei
R¹ = H, ein aliphatischer Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen, der gegebenenfalls substituiert ist,
l = 1 oder 2,
m = 2 bis 18,
wobei der Index am H-Atom durch das Produkt aus l und m gebildet wird, sowie
n = 0 bis 100 und
o = 0 bis 100,
- NHR² und/oder - NR²₂ mit
R² = R¹ oder -CO-NH₂ sowie
-Q¹N - Q² - NQ³Q⁴, wobei
Q¹ ein Wasserstoffrest oder ein einwertiger Kohlenwasserstoffrest mit 1 bis 24 Kohlenstoffatomen,
Q² ein zweiwertiger Alkylenrest mit 2 bis 24 Kohlenstoffatomen,
Q³ und Q⁴ - aliphatische und/oder alicyclische Alkylreste mit 1 bis 12 Kohlenstoffatomen sind,
gegebenenfalls oxidiert zu -Q¹N - Q² - N⁽⁺⁾O⁽⁻⁾Q³Q⁴,
Y = O, NR² , wobei R² die oben genannte Bedeutung hat, oder
N-Q²-NQ³Q⁴, wobei Q², Q³ und Q⁴ die oben genannte Bedeutung haben,
b) 1 bis 89 Mol-% Baugruppen der Formel IIa oder IIb 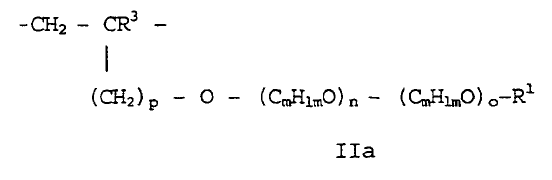 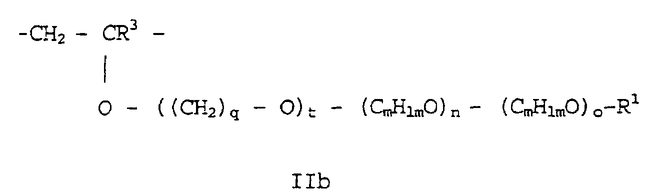 worin
R³ = H, aliphatischer Kohlenwasserstoffrest mit 1 bis 5 C-Atomen,
p = 0 bis 3,
q = 0 bis 6, t = 0 bis 3 sowie
R¹ und l, m, n und o die oben genannte Bedeutung aufweisen,
c) 0,1 bis 10 Mol-% Baugruppen der Formel IIIa oder IIIb 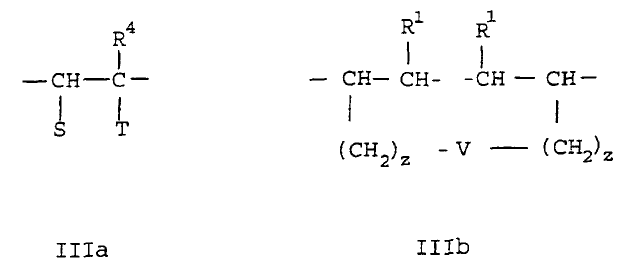 wobei
R⁴ = H, CH₃
S = - H, - COOMₐ, - COOR⁵
wobei
R⁵ = aliphatischer Kohlenwasserstoffrest mit 3 bis 20 C-Atomen, cycloaliphatischer Kohlenwasserstoffrest mit 5 bis 8 C-Atomen, Arylrest mit 6 bis 14 C-Atomen
T = Polyalkylenoxid-Derivate der Formel
T = -U¹-(CₘHₗₘO)ₙ--(CₘHₗₘO)ₒ-R⁶
mit l = l oder 2, m = 2 bis 18, sowie
n = 0 bis 100 und o = 0 bis 100,
U¹ = - CO - NH-, - O -, -OCH₂-,
R⁶ = R¹, 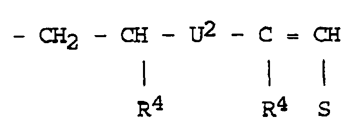 wobei U² = - NH - CO-, - O -, -OCH₂- ist,
- W - R⁷, wobei
W = 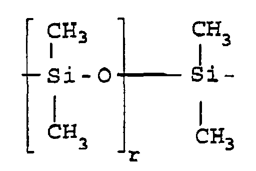
r = 2 bis 100
R⁷ = R¹, 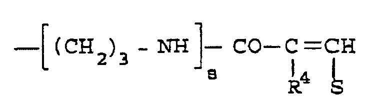 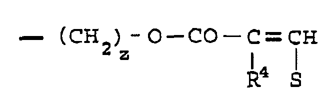
s = 1 oder 2
z = 0 bis 4 bedeuten, 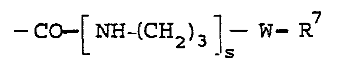
- CO - O - (CH₂)_{z} - W - R⁷
- (CH₂)_{z} - V - (CH₂)_{z} - CH = CH - R¹ , wobei
V =- O - CO - C₆H₄ - CO - O - oder - W - ist,
- COOR⁵ im Falle von S = - COOR⁵ oder COOMₐ ,
und
V = - O - CO - C₆H₄ - CO - O - oder - W bedeutet,
wobei die Liganden und Indizes jeweils die vorgenannte Bedeutung haben, als Dispergieradditive zur Herstellung wässriger Pigmentkonzentrate.

2. Verwendung nach Anspruch 1, **dadurch gekennzeichnet, dass** zusätzlich bis zu 50 Mol-%, insbesondere bis zu 20 Mol-%, bezogen auf die Summe der Baugruppen a), b) und c), Baugruppen, deren Monomere sich von Vinyl-, Acrylsäure- oder Methacrylsäurederivat ableiten, enthalten sind.

3. Verwendung nach Anspruch 1 zur Herstellung wässriger oder colöserhaltiger Pigmentkonzentrate, wobei man die Copolymere in Mengen von 0,1 bis 200 Gew.-%, bezogen auf das Pigment einsetzt.

4. Verwendung nach Anspruch 1, **dadurch gekennzeichnet, dass** man Copolymere einsetzt, die aus 40 bis 55 % Mol-% Baugruppen Ia und/oder Ib, 40 bis 55 Mol-% Baugruppen IIa und/oder IIb sowie 0,1 bis 5 Mol-% Baugruppen IIIa oder IIIb bestehen.

5. Verwendung nach einem der Ansprüche 1 bis 4, **dadurch gekennzeichnet, dass** ein Teil der Baugruppen der Formeln Ia und/oder Ib aminoxidgruppenhaltige Dicarbonsäurederivate sind.

6. Verwendung nach einem der Ansprüche 1 bis 5, **dadurch gekennzeichnet, dass** ein Teil der Baugruppen der Formeln IIIa und/oder IIIb durch Verwendung vinylischer Polysiloxan-Verbindungen erhalten wird.

7. Verwendung nach einem der Ansprüche 1 bis 6, **dadurch gekennzeichnet, dass** man die Polymerisation in wässriger Lösung bei einer Temperatur von 20 bis 100°C durchführt.

8. Verwendung nach einem der Ansprüche 1 bis 7 als Dispergieradditive für anorganische Pigmente, insbesondere (transparente) Eisenoxide oder zur Herstellung wässriger Pigmentkonzentrate mit diesen Pigmenten.

## Claims

1. Use of copolymers based on oxyalkylene glycol alkenyl ethers or polyalkylene oxide alkenyl ethers and unsaturated dicarboxylic acid derivatives comprising:
a) from 10 to 90 mol% of structural groups of the formula Ia and/or Ib 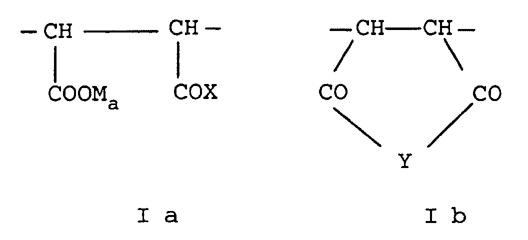 where
M = hydrogen, monovalent or divalent metal cation, ammonium ion, organic amine radical,
a = 1 or, if M is a divalent metal cation, is 1/2,
X = -OMₐ or -O-(CₘHₗₘO)ₙ--(CₘHₗₘO)ₒ-R¹,
where
R¹ = H, an aliphatic hydrocarbon radical having 1 to 20 carbon atoms, a cycloaliphatic hydrocarbon having 5 to 8 carbon atoms, an aryl radical having 6 to 14 carbon atoms which is unsubstituted or substituted,
l = 1 or 2,
m = 2 to 18,
the index on the hydrogen atom being formed by the product of l and m, and
n = 0 to 100, and
o = 0 to 100,
- NHR² and/or - NR²₂ where
R² = R¹ or -CO-NH₂ and also
-Q¹N - Q² - NQ³Q⁴, where
Q¹ is a hydrogen atom or a monovalent hydrocarbon radical having 1 to 24 carbon atoms,
Q² is a divalent alkylene radical having 2 to 24 carbon atoms,
Q³ and Q⁴ are aliphatic and/or alicyclic alkyl radicals having 1 to 12 carbon atoms, and unoxidized or oxidized to -Q¹N - Q² - N⁽⁺⁾O⁽⁻⁾Q³Q⁴,
Y = O, NR², R² being as defined above, or N-Q²-NQ³Q⁴, Q², Q³ and Q⁴ being as defined above,
b) from 1 to 89 mol% of structural groups of the formula IIa or IIb 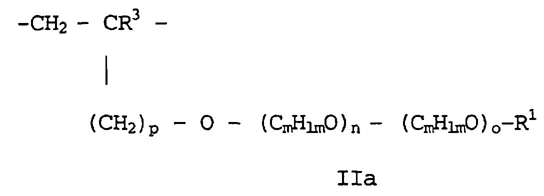 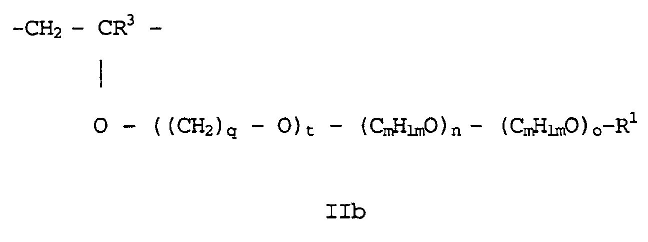 in which
R³ = H, aliphatic hydrocarbon radical having 1 to 5 carbon atoms,
p = 0 to 3,
q = 0 to 6, t = 0 to 3, and
R¹ and l, m, n and o are as defined above,
c) 0.1 to 10 mol% of structural groups of the formula IIIa or IIIb 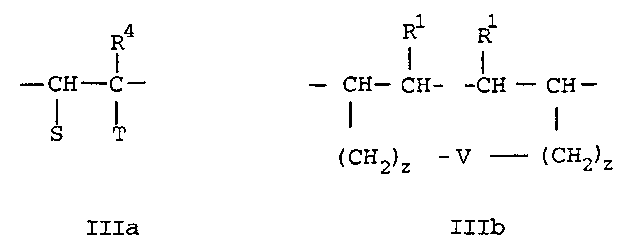 where
R⁴ = H, CH₃
S = - H, - COOMₐ, - COOR⁵
where
R⁵ = aliphatic hydrocarbon radical having 3 to 20 carbon atoms, cycloaliphatic hydrocarbon radical having 5 to 8 carbon atoms, aryl radical having 6 to 14 carbon atoms
T = polyalkylene oxide derivatives of the formula
T = -U¹-(CₘHₗₘO)ₙ--(CₘHₗₘO)ₒ-R⁶
where 1 = 1 or 2, m = 2 to 18, and
n = 0 to 100 and o = 0 to 100,
U¹ = - CO - NH-, - O -, -OCH₂-,
R⁶ = R¹, 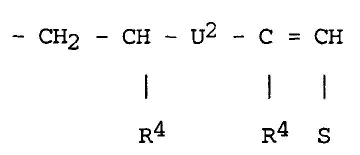 where U² = - NH - CO-, - O -, -OCH₂-,
- W - R⁷, where 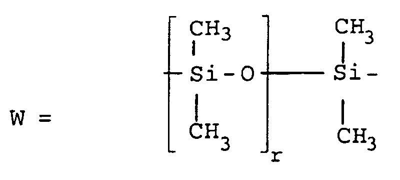 r = 2 to 100
R⁷ = R¹, 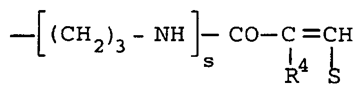 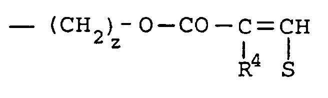 s = 1 or 2
z = 0 to 4, 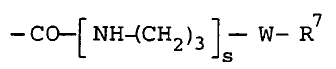 - CO - O - (CH₂)_{z} - W - R⁷
- (CH₂)_{z} - V - (CH₂)_{z} - CH = CH - R¹, where
V =- O - CO - C₆H₄ - CO - O - or - W -,
- COOR⁵ in the case of S = - COOR⁵ or COOMₐ, and
V = - O - CO - C₆H₄ - CO - O - or - W,
the ligands and indices each being as defined above as dispersing additives for the preparation of aqueous pigment concentrates.

2. Use according to Claim 1, **characterized in that** up to 50 mol%, in particular up to 20 mol%, based on the sum of the structural groups a), b) and c), of structural groups whose monomers are derived from vinyl, acrylic acid or methacrylic acid derivative are additionally present.

3. Use according to Claim 1 for preparing aqueous or cosolvent-containing pigment concentrates, the copolymers being used in amounts of from 0.1 to 200% by weight, based on the pigment.

4. Use according to Claim 1, **characterized in that** copolymers are used which consist of from 40 to 55 mol% of structural groups Ia and/or Ib, from 40 to 55 mol% of structural groups IIa and/or IIb, and from 0.1 to 5 mol% of structural groups IIIa or IIIb.

5. Use according to any of Claims 1 to 4, **characterized in that** some of the structural groups of the formulae Ia and/or Ib are dicarboxylic acid derivatives containing amine oxide groups.

6. Use according to any of Claims 1 to 5, **characterized in that** some of the structural groups of the formulae IIIa and/or IIIb are obtained by using vinyl-type polysiloxane compounds.

7. Use according to any of Claims 1 to 6, **characterized in that** the polymerization is conducted in aqueous solution at a temperature from 20 to 100°C.

8. Use according to any of Claims 1 to 7 as dispersing additives for inorganic pigments, especially (transparent) iron oxides, or for preparing aqueous pigment concentrates comprising these pigments.

## Revendications

1. Utilisation de copolymères à base d'oxyalkylèneglycolalcényléthers ou de poly(oxyde d'alkylène)alcényléthers et de dérivés d'acides dicarboxyliques insaturés, constitués de :
a) 10 à 90% en mole de groupes constitutifs de formule la et/ou IB 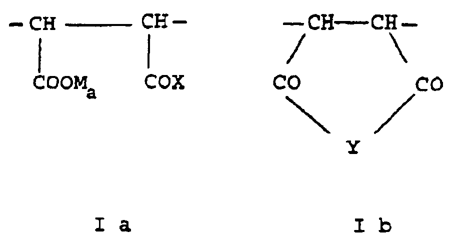 où
M = hydrogène, un cation métallique monovalent ou divalent, un ion ammonium, un radical amine organique,
a = 1 ou, pour le cas où M est un cation métallique divalent, 1/2,
X = -OMₐ ou -O-(CₘHₗₘO)ₙ--(CₘHₗₘO)ₒ-R¹ où
R¹ = H, un radical hydrocarboné aliphatique comprenant 1 à 20 atomes de carbone, un hydrocarbure cycloaliphatique comprenant 5 à 8 atomes de carbone, un radical aryle comprenant 6 à 14 atomes de carbone, qui est éventuellement substitué,
l = 1 ou 2,
m = 2 à 18,
l'indice de l'atome d'hydrogène étant formé par le produit de l et m et
n = 0 à 100 et
o = 0 à 100,
-NHR² et/ou -NR²₂ avec
R² = R¹ ou -CO-NH₂ ainsi que
-Q¹N-Q²-NQ³Q⁴, où
Q¹ représente un atome d'hydrogène ou un radical hydrocarboné monovalent comprenant 1 à 24 atomes de carbone,
Q² représente un radical alkylène divalent comprenant 2 à 24 atomes de carbone,
Q³ et Q⁴ représentent des radicaux alkyle aliphatiques et/ou alicycliques comprenant 1 à 12 atomes de carbone,
le cas échéant oxydé en -Q¹N-Q²-N⁽⁺⁾O⁽⁻⁾Q³Q⁴,
Y = O, NR², où R² a la signification susmentionnée ou
N-Q²-NQ³Q⁴, où Q², Q³ et Q⁴ ont la signification susmentionnée,
b) 1 à 89% en mole de groupes constitutifs de formule IIa ou IIb 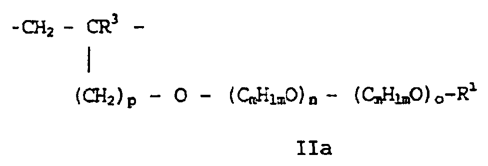 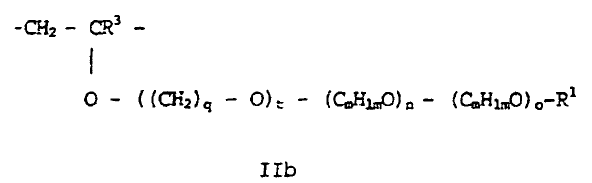 dans lesquelles
R³ = H, un radical hydrocarboné aliphatique comprenant 1 à 5 atomes de carbone,
p = 0 à 3,
q = 0 à 6, t = 0 à 3 et
R¹ et l, m, n et o présentent la signification susmentionnée,
c) 0,1 à 10% en mole de groupes constitutifs de formule IIIa ou IIIb 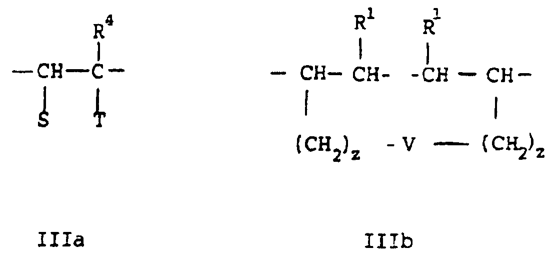 où
R⁴ = H, CH₃,
S = -H, -COOMₐ, -COOR⁵ où
R⁵ = un radical hydrocarboné aliphatique comprenant 3 à 20 atomes de carbone, un radical hydrocarboné cycloaliphatique comprenant 5 à 8 atomes de carbone, un radical aryle comprenant 6 à 14 atomes de carbone,
T = des dérivés de poly(oxyde d'alkylène) de formule
T = -U¹-(CₘHₗₘO)ₙ--(CₘHₗₘO)ₒ-R⁶
avec 1 = 1 ou 2, m = 2 à 18, et n = 0 à 100 et o = 0 à 100,
U¹ = -CO-NH-, -O-, -OCH₂-,
R⁶ = R¹, 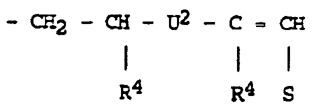
où U² = -NH-CO-, -O-, -OCH₂-,
- W-R⁷, où
W = 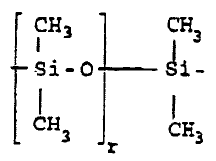 r = 2 à 100,
R⁷ = R¹, 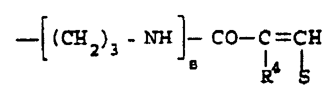 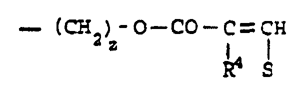 s = 1 ou 2
z = 0 à 4,
-CO-[NH-(CH₂)₃]ₛ-W-R⁷
-CO-O-(CH₂)_{z}-W-R⁷
-(CH2)_{z}-V-(CH₂)_{z}-CH=CH-R¹, où
V=-O-CO-C₆H₄-CO-O- ou -W-,
-COOR⁵ dans le cas où S = -COOR⁵ ou COOM
et V = -O-CO-C₆H₄-CO-O- ou -W,
les ligants et les indices ayant à chaque fois la signification susmentionnée, comme additifs de dispersion pour la préparation de concentrats aqueux de pigments.

2. Utilisation selon la revendication 1, **caractérisée en ce qu'**en outre jusqu'à 50% en mole, en particulier jusqu'à 20% en mole, par rapport à la somme des groupes constitutifs a), b) et c), des groupes constitutifs dont les monomères sont dérivés de dérivés de vinyle, d'acide acrylique ou d'acide méthacrylique, sont contenus.

3. Utilisation selon la revendication 1 pour la préparation de concentrats aqueux de pigments ou contenant des cosolvants, les copolymères étant utilisés en des quantités de 0,1 à 200% en poids par rapport au pigment.

4. Utilisation selon la revendication 1, **caractérisée en ce qu'**on utilise des copolymères qui sont constitués de 40 à 55% en mole de groupes constitutifs Ia et/ou Ib, de 40 à 55% en mole de groupes constitutifs IIa et/ou IIb ainsi que de 0,1 à 5% en mole de groupes constitutifs IIIa ou IIlb.

5. Utilisation selon l'une quelconque des revendications 1 à 4, **caractérisée en ce qu'**une partie des groupes constitutifs des formules Ia et/ou Ib sont des dérivés d'acides dicarboxyliques contenant des groupes aminoxyde.

6. Utilisation selon l'une quelconque des revendications 1 à 5, **caractérisée en ce qu'**une partie des groupes constitutifs des formules IIIa et/ou IIIb sont obtenus en utilisant des composés polysiloxane vinyliques.

7. Utilisation selon l'une quelconque des revendications 1 à 6, **caractérisée en ce qu'**on réalise la polymérisation en solution aqueuse à une température de 20 à 100°C.

8. Utilisation selon l'une quelconque des revendications 1 à 7 comme additifs de dispersion pour des pigments inorganiques, en particulier les oxydes de fer (transparents) ou pour la préparation de concentrats aqueux de pigments avec ces pigments.
